# EUROPEAN PATENT APPLICATION

(11) **EP 1 087 037 A2**
(43) Date of publication of application: **28.03.2001**
(21) Application number: 00120617.6
(22) Date of filing: 21.09.2000
(51) Int. Cl.: C25D 1/08, F01D 5/18

(54) **Porous element for the effusive cooling of machine components**

(30) Priority: 23.09.1999 GB 9922574
(71) Applicant: Battisti, Lorenzo, 38100 Trento (IT)
(72) Inventor: Battisti, Lorenzo, 38100 Trento (IT)
(74) Representative: Bonini, Ercole

(57) **Abstract**

The invention relates to a porous element for the effusive cooling of components of engines working with a fluid at a high temperature, consisting of a substantially laminar structure obtained in an electrolytic bath by means of a galvanic electroforming process with deposition of a metal or metal alloy on a matrix arranged at the cathode and having conductive areas separated by insulating areas. Said laminar structure has an external surface that is smooth and devoid of roughness and being crossed by micro-holes that correspond to exposed insulating areas of said matrix and have diameters smaller than 300 microns, density of said micro-holes is from 2 to 10 dots/mm.

## Description

The present invention relates in general to the cooling of engine components working in contact with fluids at a high temperature, especially, but not exclusively, such parts of gas turbines as bladed stator and rotor elements, filtration and nebulization components of combustors, boilers and combustion chambers in general.

As is welt known, the maximum temperature attained during a cycle of operations is the parameter that exerts the greatest influence on the efficiency of systems that produce energy in the form of work or propulsive thrust and, above all, on the specific work that can be obtained from such systems.

The attainment of high temperatures is nevertheless limited by the resistance and reliability characteristics of the engine components when in contact with fluids at high temperatures, especially first turbine stages, combustion chambers, etc. The development of superalloys has made it possible in recent decades for the working temperatures of these components to be increased even though the limit of the attainable temperatures and the costs are gradually causing the curve of this development to become asymptotic, thus shifting the accent onto mixed solutions that envisage the combined use of superalloys and component cooling techniques.

It is especially in this area of the combined solutions that the greatest efforts of research and investment have been concentrated in recent years. The superalloys available today do not permit the continuous working temperatures of such engines to exceed values that, according to the expected life of the engine, may range from 800 to 1000°C and it is therefore clear that turbine inlet temperatures in excess of 1200 - 1300°C impose on designers the need to have recourse to systems, cooling being a case in point, capable of preserving the integrity and functionality of the component.

Among the various heat exchange processes employed for the purpose of cooling engine components operating at high working temperatures, those that have so far achieved the greatest technological development are the so-called external air film cooling techniques as applied to turbine blades, in particular.

The air, which is normally extracted from the last compressor stages, is introduced into the blade via the root (in the case of a rotor), flows along passages obtained by means of various techniques within the body of the blade, from which it eventually issues through discrete holes or slots in particular regions of the blade surface. The ejection of the air thus comes to create a film of protective air at a temperature considerably lower than that of the hot gases: as it passes over the outer surfaces of the blade, this air film forms a thermal barrier that owes its efficacy to its fluid dynamics properties.

As a general rule, a cooling system of this type must be such as to ensure that at the conditions under which the blade has to work the temperature will be maintained at each and every point of the blade surface below - or, at the limit, equal to - the maximum permissible working temperature of the material. It has been shown experimentally that the maximum efficacy of such systems is obtained when the outlet holes are small and closely spaced and the ejection speed of the air is close to that of the turbine gases.

Because the aforementioned systems are associated with a certain consumption of the working fluid, the flow rate of the cooling air constitutes another parameter of great interest. In gas engines, and especially in the initial stages of a gas turbine, the heat flows are very high, of the order of 1 MW/m²: this means that the flow rate of the cooling air may represent a conspicuous fraction (up to 30 - 35%) of the principal flow, with a very marked effect on the thermodynamics of the cycle and the work output obtained from the engine.

It would therefore be desirable to find a way of limiting the flow fraction extracted for cooling the component, while yet maintaining the surface of the said component within the necessary temperature limits. Given parity of the surfaces to be cooled and of the component thickness (the latter, obviously, to avoid negative effects on the mechanical strength and other technological constraints), this result can be obtained only by stepping up the efficiency of the cooling.

According to the present this invention there is provided a porous element for the effusive cooling of components of engines working with a fluid at a high temperature, characterized in that it consists of a substantially laminar structure obtained in an electrolytic bath by means of a galvanic electroforming process with deposition of a metal or metal alloy on a matrix arranged at the cathode and having conductive areas separated by insulating areas, the said laminar structure having an external surface that is smooth and devoid of roughness and being crossed by micro-holes that correspond to exposed insulating areas of said matrix and have diameters smaller than 300 microns, density of said micro-holes is from 2 to 1 0 dots/mm.

The porous element of the invention enables an intrinsic cooling function to be attained by means of the effusion of air or, fluids in general, through its porous structural matrix. In general, this intrinsic function can be obtained by equipping the component (blade, combustor casing, combustion chamber, etc.) with a lining consisting of one or more inserts or, alternately, a support structure with micro-holes obtained by means of electroforming techniques.

In this manner increasing of the cooling efficacy is in practice attained by means of a "sweating" effect, in which the wall of the engine component is constituted either wholly or partly by a porous medium through which the cooling fluid may effuse until it eventually reaches the same temperature as the wall exposed to the flow of the working gas. Seen from a different point of view: while achieving a certain cooling efficacy, the necessary flow rates of cooling air will thus be drastically reduced to the benefit of cycle efficiency and the output of useful work.

The effusive cooling of engine components working in contact with fluids at high temperatures can be obtained especially with a blade component for turbine-type engines. Such engines typically comprise a blade body and a platform for attachment to a root part and arranged for the ejection of pressurized air from within the blade component to the outside to create a heat barrier of a fluid dynamic type on the surface of said blade element, by having the blade component constituted at least partly by a porous element in accordance with the invention.

In practice the invention makes available a microporous structure that - as far as the cooling is concerned - has a configuration that is conceptually similar to those micro porous structures with discrete holes or slits utilized in the so-called air film cooling systems mentioned above: however, given the very high density of the micro-pores, the fluid dynamics behaviour of the material is close to that of a transpiration (sweating) wall.

The proposed fabrication procedure is based on an electrolytic forming method and is considerably simpler than the traditional fabrication methods (melting, moulding, machine tool processing) of known perforated structures; from the technological point of view, moreover, it renders possible solutions that cannot be obtained by means of these state-of-the-art techniques, a case in point being the cooling of the tail part of the body of a blade element of a gas turbine. Even though other and less conventional fabrication techniques employed in this and related procedures for the realization of perforated elements intended for cooling functions, including - among others - the use of electrically welded or sinterized grids or holed plates, make it possible to obtain better results in terms of thermal performance and enhanced resistance to oxidation and corrosion phenomena, they have brought to the fore problems deriving from the clogging of the holes associated with the use of dirty fuels. A not insignificant contribution to this clogging phenomenon is made by the very rough surface of the perforated elements fabricated in this manner.

The present invention is deemed to be capable of appreciably increasing the performance limits typical of the aforesaid known solutions, first and foremost thanks to the extreme lightness that can be obtained due to the very high surface density of the micro-holes, and secondly thanks to the surface roughness of the material, which micrometer measurements show to be greatly reduced.

The principal advantages obtainable by means of the invention can be summarized as follows:
- the use of a highly porous material leads to a considerable reduction in the weight of the component in which it is employed, thereby reducing the magnitude of the weight stresses;
- the surface and the body of the component are maintained below the limiting temperatures for viscous flow that lead to a drastic reduction of the strength and structural integrity characteristics;
- the solid and liquid particulate matter present in the working fluid is deflected more efficaciously by the surface air film, thus forestalling such phenomena as erosion, deposition and sulphation of the surface;
- the surface temperature of the component is lowered below the threshold of heat corrosion and surface oxidation is controlled to within acceptable limits;
- component cooling can be very readily obtained even in zones that have always been associated with difficulties of a technological nature during manufacture and machining.

The sum total of the effects set out above makes it possible to obtain components of engines operated by high-temperature fluids that, given parity of employed material and expected life, yield better performances or, alternately, to prolong the useful life of components realized with low-quality materials to the levels typical of materials that are more costly and call for more complex production processes.

The invention will now be described in greater detail by reference to the attached drawings, which - though furnished solely by way of example and not to be considered limitative in any manner or wise - represent some practical implementation modes specifically applied to a blade element of a gas turbine.

In the said drawings:
Figure 1 shows a schematic perspective view of such a blade element in accordance with a first embodiment of the invention;
Figure 2 shows a simplified view similar to Figure 1, which illustrates a second embodiment of the blade element;
Figure 3 shows a fragmentary view to a larger scale and illustrates a third embodiment of the blade element;
Figure 4 shows, again to a substantially larger scale, a partial and schematic view of the section of a portion of the porous element used in the construction of the blade element of Figures 1, 2 and 3, and
Figure 5 shows a fragmentary plan view, as seen from above and in the direction the arrow V, of Figure 4.

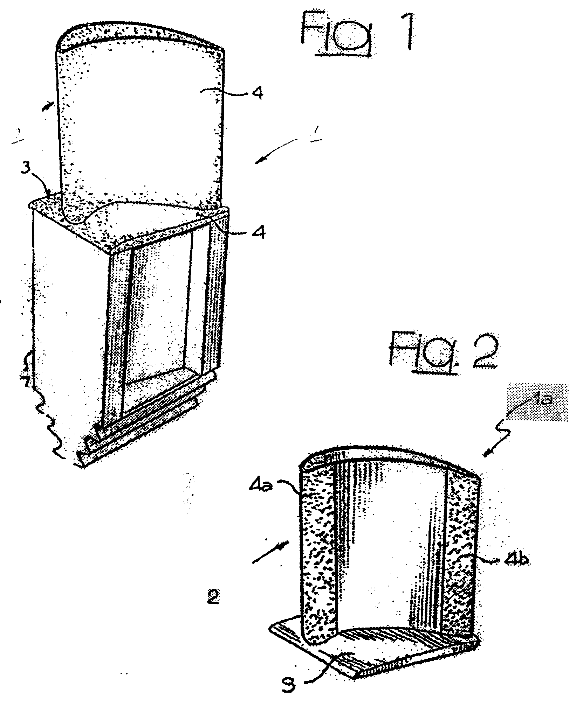

Reference number 1 in Figure 1 generically indicates a blade element capable of being used - for example - in the rotor of a gas turbine. The blade element 1 consists in the usual manner, of a foil or blade body 2 with a platform 3 for attaching it to a root part 7.

The entire blade body 2, viz, the entire wall that defines its aerodynamic profile, is constituted by a self-supporting structural shell formed by a porous element indicated by the reference number 4. The said porous element 4 could possibly be used also, as in the case of the example illustrated by Figure 1, for the realization of the platform 3. In that case the blade body 2 and the platform 3 may be constituted either by two separate pieces or by a single piece.

What has just been said applies also as regards the realization of the tip of the blade element (which is not shown in the drawing).

The porous element 4 is illustrated in greater detail in Figures 4 and 5. It has a micro-perforated laminar structure, where the perforations, indicated by the reference number 5 , have a shape in plane (or transverse section) that may be - for example - either polygonal, normally hexagonal, or rhomboidal and walls that have rounded surfaces and taper from the outer face of the lamina towards the inner face.

More generally, the holes 5 may have a form that wholly converges or wholly diverges from the outer face to the inner face of the lamina and may also be of a converging-diverging form. The holes may also have a form which, is partly converging and partly diverging from the external surface to the internal surface of the laminar structure. The holes 5 may have diameters that, depending on the length of time in the galvanic bath and the desired thickness of the laminate, will normally be less than 300 microns, for example, comprised between 3 and 60 microns. These diameter sizes may be either all the same or differ from one region to another, in accordance with appropriate optimization criteria.

The density of the holes 5 is from 2 to 10 dots/mm, while the thickness of the lamina may be of the order of from 80 microns to 500 microns.

In producing a porous structure according to the invention, a galvanic electroforming process will be carried out in an electro-deposition bath, with deposition of metal preferably nickel, on a matrix arranged at the cathode. The matrix, generically indicated by the letter M, has a hollow imprint, sometimes referred to as "inkpot", suitable for creating the conductive zones for the electroforming process having conductive areas separated by insulating zones S, and produced by filling with dielectric resins that constitute the electroformed holes and eventually levelling and chrome-plating. In this way the nickel formed on the matrix M during the electro-galvanization process becomes deposited so as to surround the imprints S, thus forming the micro-holes 5. The surface of the lamina 4 realized in this manner has its outer surface, i.e. the surface that during the formation process is turned towards the matrix M, perfectly smooth and devoid of all roughness.

Although nickel (or its alloys) is considered as the preferred material, it is quite clear that the electrolytic deposition process for forming the lamina 4 can also make use of other metal and alloys, a case in point being cobalt-base alloys.

In the case of the variant illustrated by Figure 2, the porous element constituting the previously described micro-perforated lamina is used to form not the blade body 2 as a whole, but only one or preferably two inserts, indicated by the reference numbers 4a and 4b, situated respectively at the tip or leading edge 4a and the tail or trailing edge 4b of the blade, in this case indicated by 1a.

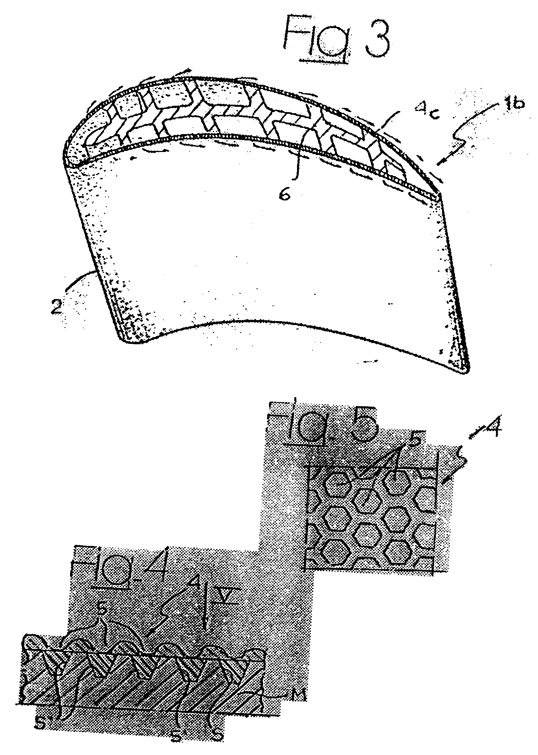

The solution illustrated by Figure 3 is similar to that, of Figure 1, in the sense that the porous element 4 constitutes the whole of the blade body 1b. Unlike the case of Figure 1, however, the porous element 4 in this case is not self-supporting, but constitutes a lining 4c that is inserted and fixed on an internal supporting structure 6 that also has the function of appropriately channeling the cooling air.

Alternatively, the internal supporting structure 6 could perform nothing other than the function of channeling the cooling air within the blade, and in this case the lining 4c will constitute a self-supporting structure as in the case of Figure 1.

In the embodiments that have just been described, as all the possible variants thereof embodying the invention, the micro-holes 5 of the porous element 4 (or 4a , 4b , 4c) perform a primary function of cooling by means of the ejection of air that is normally extracted from the final compressor stages and passed into the interior of the blade body 4. The air issues from the micro-holes 5 by means of a sweating or total effusion action, eventually attaining the temperature of the outer wall of the blade exposed to the flow of the working gases. This assures maximum blade cooling efficacy and avoids the problems of the clogging of the micro-holes 5 even when dirty fuels are being used, thanks to the smooth form of the external surface of the porous element 4, which is devoid of all roughness, and the flow conditions that would otherwise prevail on this surface. To this one has to add the previously listed advantages in terms of structural weight reduction maintenance of the resistance and structural integrity characteristics over the course of time, prevention of erosion, sulphation, corrosion and oxidation phenomena, as well as the technological simplicity of the production process.

It should however be noted that, even though the invention has here been described with express reference to a blade element, it can be applied in an equally advantageous manner to other engine components that work in contact with high-temperature fluids, cases in point being filtration and nebulization components of combustors, boilers and combustion chambers in general. In particular, when applied to components of combustors and, more generally, components of gas installations in contact with working fluids, the porous element 4, which can always be used either as a self-supporting structure or in the form of inserts or linings, performs not only its characteristic cooling function, but also - through its micro-holes 5 - a useful and efficacious distributing action.

Lastly, it should be specified that the expression "engine working with a fluid at a high-temperature" as used in the description hereinabove and in the claims appended hereto is not to be understood in a limitative sense as referring exclusively (as in the case of a turbine-type engine) to an engine apparatus for the production of energy, but is to be interpreted in a wider sense as referring to any kind of contraption, apparatus or device equipped with at least one component subject to forces that perform work and subject in some way to the heat exchange problems mentioned at the beginning of the present description. The expression is therefore to be considered as referring - among others - also to thermal shields and, more generally, to protective surfaces of aircraft carrying out missions at supersonic speeds, and to anti-icing devices for aircraft, of which the former work by means of effusive cooling and the latter by means of effusive heating with application of porous elements in accordance with the invention. In the former case, in fact, the very high temperatures attained by the surfaces at supersonic speeds induce not only local overheating phenomena, but also undesirable chemical reactions at the affected surfaces. By analogy with the previous explanations, the surface protection obtained by means of effusive cooling brought about with porous elements in accordance with the invention may lead to substantial improvements of the performance, reliability and useful life of these components. In the latter case, again, local heating of surface portions - of the wings, for example - may be obtained by means of air transpiration through porous elements in accordance with the invention and with a heat exchange efficiency that will also attain the advantageous result of a very modest air consumption, an undoubtedly critical parameter as far as the energy management of mobile equipment is concerned. Furthermore, the intrinsic lightness of the porous element in accordance with the invention makes it undoubtedly suitable for other aeronautical and aerospace applications.

## Claims

1. A porous element for the effusive cooling of components of engines working with a fluid at a high temperature, characterized in that it consists of a substantially laminar structure obtained in an electrolytic bath by means of a galvanic electroforming process with deposition of a metal or metal alloy on a matrix arranged at the cathode and having conductive areas separated by insulating areas, the said laminar structure having an external surface that is smooth and devoid of roughness and being crossed by micro-holes that correspond to exposed insulating areas of said matrix and have diameters smaller than 300 microns, density of said micro-holes is from 2 to 10 dots/mm.

2. A porous element in accordance with claim 1, characterized in that the said micro-holes all have the same diameter.

3. A porous element according to claim 1, characterized in that the said micro-holes have different diameters.

4. A porous element according to claim 1, characterized in that the said micro-holes have diameters in the range from 3 to and 60 microns.

5. A porous element in accordance with any one of the preceding claims, characterized in that the said micro-holes have a polygonal or rhomboidal section.

6. A porous element in accordance with any one of the preceding claims, characterized in that the said metal is nickel, nickel base alloys, cobalt or cobalt base alloys.

7. A porous element in accordance with any one of the preceding claims, characterized in that the said micro-holes have a form that is wholly converging or wholly diverging from the external surface to the internal surface of the said laminar structure or have a form which is partly converging and partly diverging from the external surface to the internal surface of the said laminar structure.

8. An engine component which comprises a porous element in accordance with one or more of the preceding claims and a supporting structure, the porous element constituting at least part of the said supporting structure of the said engine component.

9. An engine component in accordance with claim 8, in which the porous element constitutes the entire supporting structure of the said engine component.

10. An engine component in accordance with claim 8, in which the porous element constitutes at least an insert in the said supporting structure of the said engine component.

11. An engine component which comprises a porous element in accordance with any one of claims 1 to 7 and an internal supporting structure, the porous structure constituting a lining shell of the said internal supporting structure.

12. An engine component in accordance with claim 11, characterized in that the said supporting structure defines air channels.

13. An engine component in accordance with one of claims 8 to 12, which is a blade component of the stator or the rotor of a gas turbine.

14. A blade component for a turbine comprising a blade body and a platform for attachment to a blade root part to be arranged for the ejection of pressurized air from within the blade component to the outside to create a heat barrier of a fluid dynamic type on the surface of the said blade element, which blade component is an engine component as claimed in any one of claims 8 to 12.

15. A blade component in accordance with any one of claims 8 to 11, which is a component of a combustor or a boiler or a combustion chamber of a gas turbine or plant.

16. A porous element in accordance with any one of the claims 8 to 11, which is a cooling insert of a blade.

17. A porous element in accordance with any one of the claims 1 to 7, which is a surface protection of aircraft for missions at supersonic speeds.

18. A porous element in accordance with any one of claims 1 to 7, which is an anti-icing device for aircraft.

19. A porous element and blade component substantially as hereinbefore described with reference to Figure 1, 2 or 3 of the accompanying drawings, optionally in conjunction with Figures 4 and/or 5.
